# EUROPEAN PATENT SPECIFICATION

(11) **EP 3 543 088 B1**
(45) Date of publication and mention of the grant of the patent: **23.12.2020**
(21) Application number: 18168877.1
(22) Date of filing: 24.04.2018
(51) Int. Cl.: B62D 21/12, B62D 21/20, B62D 59/04, F16B 2/06, F16B 7/04, F16B 2/10, F16B 2/12

(54) **ATTACHMENT DEVICE, SYSTEM AND VEHICLE WITH SUCH AN ATTACHMENT DEVICE, AS WELL AS USE OF THE SAME**
BEFESTIGUNGSVORRICHTUNG, SYSTEM UND FAHRZEUG MIT SOLCH EINER BEFESTIGUNGSVORRICHTUNG SOWIE DEREN VERWENDUNG
DISPOSITIF DE FIXATION, SYSTÈME ET VÉHICULE ÉQUIPÉ D'UN TEL DISPOSITIF DE FIXATION AINSI QUE SON UTILISATION

(30) Priority: 22.03.2018 CN 201810239069
(43) Date of publication of application: 25.09.2019
(73) Proprietor: Carman Enterprise Co., Ltd., Yuhang District Hangzhou Zhejiang 311121 (CN)
(72) Inventor: Li, Xianwei, Zhejiang (CN)
(74) Representative: Paul & Albrecht Patentanwälte PartG mbB

(56) References cited:
- EP-A1- 2 551 173
- EP-A1- 3 287 347
- JP-A- H09 207 814
- US-A1- 2006 151 676
- Unistrut: "Unistrut Beam Clamps", , 31 August 2016 (2016-08-31), XP055739738, Retrieved from the Internet: URL:- [retrieved on 2020-10-14]
- Unistrut: "Steel C-Clamp", , 31 October 2014 (2014-10-31), XP055739742, Retrieved from the Internet: URL:- [retrieved on 2020-10-14]

## Description

The invention relates to an attachment device for attaching a cross member, which preferably supports at least one maneuvering drive, at a vehicle, comprising
- a basic element that defines a preferably elongated reception space for at least a section of a cross member to be attached, extending in the longitudinal direction,
- a preferably elongated lever element that is supported at the basic element, in particular at the preferably open top side of the basic element, so as to be pivotable about a pivot axis,
- at least one clamping device by means of which an end area of the lever element can be moved in the direction of the basic element to clamp a component of a vehicle, in particular the chassis of a vehicle, between this end area and a cross member that is received by the basic element and/or the basic element.

Moreover, the invention relates to a system with at least one such attachment device and a cross member as well as a vehicle comprising such a system. Finally, the invention relates to the use of such an attachment device.

What is already known from the state of the art are so-called auxiliary or maneuvering drive systems by means of which vehicles without their own drive, such as camping, boat or horse trailers, can for example be moved or maneuvered comfortably even if they are not connected to a towing vehicle.

Such a system usually comprises at least two maneuvering drive units via which two wheels of a vehicle to be maneuvered can be set into rotation. The maneuvering drive units are mounted at the outer side of the vehicle, usually in an area directly in front of or behind the wheels that are to be driven by means of the units. The maneuvering drive units respectively comprise a drive element that is motor-rotated and brought into a frictionally engaged contact with a wheel of the vehicle, so that a rotation of the drive element causes a rotation of the corresponding wheel of the vehicle. A system with two such maneuvering drive units is for example explained in DE 20 2014 103 988 U1, as well as DE 20 2016 105 321 U1 that have also been filed by the applicant.

In order to attach the maneuvering drive units in a reliable manner, it has proven to be advantageous to affix a continuous cross member carrying two maneuvering drive units at the chassis, that is, the chassis of a vehicle to be driven. This kind of attachment can be seen in Figure 1 of DE 20 2016 105 321 U1, for example. Specifically, the cross member is affixed at both sides of the vehicle respectively at a side beam of the vehicle frame, wherein clamping elements with U-shaped clamps are used for this purpose, surrounding the respective side beam at the outer side.

A particularly reliable and safe as well as robust attachment of the maneuvering drive system is of great importance. On the one hand, the roller-type drive elements must be reliably held in contact with the respective wheel during a maneuvering process. On the other hand, it is important that a reliable affixing is ensured at all times, for example also during longer drives when the vehicle is towed by a towing vehicle and the maneuvering drive system is not needed, since a component falling off would entail a very high risk of an accident occurring. At the same time, it is desirable that a vehicle can be provided with a maneuvering drive system in a particularly comfortable manner, which requires for the mounting to be as easy as possible.

What is described in a EP 2 551 173 A1 is an attachment device that represents an alternative to the clamping elements with U-shaped clamps as they are known from DE 20 2016 105 321 U1. It comprises a basic element that is formed as a U-shaped profile part defining a longitudinally extending elongated reception space for a longitudinal section of a cross member to be attached, with a lever element being supported at its open top side so as to be pivotable about a pivot axis. A pressure element is provided at the one end area of the lever element, and a clamping device is provided at the other facing end area, with the clamping device being embodied to create a force between the associated end of the lever element and a section of a cross member that is arranged inside the basic element. At that, the arrangement is realized in such a manner that, in the event of a force being applied, the respective end is moved away from the basic element, while the facing other end at which the pressure element is positioned is simultaneously moved towards the basic element. For this purpose, the pivot axis is located approximately centrally between the end with the pressure element and the end with the clamping device, so that the lever element forms a kind of rocker. If the clamping device is actuated and the end area of the lever element with the pressure element is moved in the direction of the basic element, a section of a component of the vehicle, in particular of a support of a chassis, that is located between the pressure element and the basic element can be clamped in between the lever element and the basic element, and the cross member, of which a longitudinal section extends through the reception space in the basic element, is thus affixed in a clamping manner. To reliably affix a cross member at a vehicle, two of these attachment devices of this type are used, by means of which respectively one end area of a cross member is fixated in a clamping manner at the two facing side members of a chassis.

In principle, the attachment devices as they are known from EP 2 551 173 A1 have proven to be useful. However, there still remains a need for alternatively embodied attachment devices that facilitate a particularly reliable affixing of a cross member at a vehicle, while at the same time being comfortable and easy to mount. It is therefore an object of the present invention to provide such an attachment device.

In an attachment device of the previously mentioned kind, this objective is obtained by embodying and arranging the at least one clamping device in such a manner that a force transmission occurs through the at least one clamping device in that end area of the lever element that is moved towards the basic element as a result of the force transmission.

It has been found that a particularly reliable affixing of a cross member with an attachment device of the above-mentioned kind is possible if, in contrast to the explicit teaching of the state of the art, the clamping force is introduced not at the end that is facing the clamping area of the lever element, but rather in the same end area.

Preferably, that end area of the lever element that faces that end area that is moved in the direction of the basic element as a result of the force transmission through the at least one clamping device, is supported at the basic element in a pivotable manner. In that case, the at least one clamping device is preferably arranged closer at that end area that is moved in the direction of the basic element as a result of the force transmission than at the pivotably supported end area.

The at least one clamping device can further be arranged at the side of the basic element with respect to the longitudinal direction, so that it is particularly easily accessible to be actuated by a user.

A further particularly preferable design of the attachment device according to the invention is characterized by the at least one clamping device comprising an actuating element, in particular in the form of a nut or a screw head, and the actuating element being arranged close to the bottom side of the basic element. In this case, the actuating element or - in the case of two or more clamping devices being present - the actuating elements can be accessed particularly comfortably from the bottom side of the chassis, where there is enough available space. A user can for example comfortably actuate the actuating element or elements by using an electrically driven screw driver, such as for example a cordless screwdriver or the like, from the bottom side, and in this way reliably clamp in a received cross member at a vehicle chassis in a simple manner. For this purpose, they may for example lay under the vehicle or reach under it from the side.

It has proven to be particularly advantageous if the at least one clamping device comprises at least one through bore that is provided in the basic element, and at least one through bore that is preferably aligned with the same and provided in the lever element, as well as a clamping element extending through the two through bores which may in particular be present in the form of a screw or threaded rod and preferably extends at least substantially orthogonally with respect to the longitudinal direction. In particular when interacting with one or multiple nuts, screws and threaded rods represent suitable and at the same time constructionally simple and cost-effective means for comfortably creating a clamping force, for example by merely rotating a nut or screw, and thus to affix a received cross member at a vehicle chassis with the attachment device in a clamping manner.

Further, it can be provided that the basic element and the lever element respectively have at least one projection arranged at the side, preferably being aligned with each other, and respectively one of the through bores is provided in each projection. If the aligned through bores through which the clamping elements, which may in particular be provided in the form of screws or threaded rods, extend are located in the sidewise projections, a particularly advantageous force transmission and easy access to the clamping device or the clamping devices, in particular an actuating element or actuating elements can be provided at the same time. It is particularly preferable if a reception space is provided in one projection, being formed such that a nut or a screw head of a clamping device can be positioned therein in a torque-proof manner.

It is especially preferable if the attachment device according to the invention comprises at least two, in particular exactly two, clamping devices.

If at least two, in particular exactly two, clamping devices are present, respectively at least one, in particular exactly one, clamping device is arranged preferably towards two facing sides of the basic element. In this case, in particular a symmetrical arrangement can be obtained, which facilitates a particularly even force application.

It is further preferable if, in the case that two or more clamping devices are provided and these respectively comprise at least one clamping element in particular in the form of a screw and/or threaded rod, the clamping elements extend at least substantially in parallel to each other.

The basic element as well as the lever element can be respectively embodied as U-shaped profile parts. Further, the basic element and/or the lever element can be made of punched sheet steel. These designs have proven to be an easy-to-manufacture, low-cost and at the same time particularly stable variant.

According to a further embodiment, it is provided that a pressure element is arranged at that end area of the lever element that can be moved towards the basic element by means of the at least one clamping device. The pressure element is preferably attached at the lever element and/or is arranged in such a manner that it can be brought into contact with a component of a vehicle, in particular the chassis of a vehicle, or is in contact with a component of a vehicle, in particular the chassis of a vehicle, in the mounted state according to the intended use of the attachment device.

As an alternative to the pressure element being attached at the lever element, it can also represent a separate component that is manually positioned by the user in a suitable position during a mounting procedure. After positioning the pressure element by hand, the at least one clamping device can be actuated for affixing a cross member in a clamped manner.

The pressure element facilitates a particularly safe affixing and, as a pressure-receiving element, at the same time serves for protecting that component of a vehicle at which the attachment device is attached, for example a stringer of a vehicle frame.

The pressure element preferably consists of a material or comprises such a material that is characterized by a hardness of less than 140 HB. For example, the pressure element may consist partially or completely of an aluminum alloy.

At its bottom side that is to be brought into contact with a component of a vehicle, in particular the chassis of a vehicle, the pressure element is preferably characterized by a wave-shaped profile that increases the friction, and therefore the grip. Alternatively or additionally, it can have a coating of rubber and/or plastic material at the bottom side.

For a particularly reliable positioning, the lever element can further comprise at least one downwardly protruding, in particular U-shaped or V-shaped, projection, and the pressure element can have at least one correspondingly shaped and arranged indentation into which in particular the U-shaped or V-shaped projection of the lever element meshes in the mounted state according to the intended use of the attachment device. Preferably, the lever element comprises at least two downwardly protruding, in particular U-shaped or V-shaped, projections, and the pressure element preferably has at least two correspondingly shaped and arranged indentations into which the projections mesh in the mounted state. Through the indentation(s) and corresponding projection(s), a firm pressing together can also be obtained in the event that a variation in thickness is present in that component at which the attachment device is clamped in, such as for example a chassis.

In further preferable designs of the attachment device according to the invention, the arrangement is realized in such a manner that, in the mounted state according to the intended use of the attachment device, a component of a vehicle, in particular the chassis of a vehicle, is clamped in between that end area of the lever element that can be moved towards the basic element, or a pressure element arranged at this end area, and a section of a cross member that is received by the basic element and/or the basic element as a result of the force applied by the at least one clamping device.

A further subject matter of the invention is a system comprising at least one, preferably exactly two, attachment device(s) according to the invention and at least one cross member at which in particular at least one maneuvering drive unit for a vehicle is supported. The cross member preferably has a rectangular, in particular at least substantially square, profile that may for example be embodied as a square tube. Moreover, the basic element and the cross member are preferably dimensioned in such a manner that a section of a cross member that is arranged in a reception space defined by the basic element protrudes at least in one end area of the basic element upwards and above the basic element, preferably by at least 1 mm. In that case, in the mounted state according to the intended use, the lever element does not come into contact or does come into contact not only with the basic element, is in particular not clamped or clamped not only against the basic element, but rather (also) against a received, upwardly protruding cross member.

In addition, the invention relates to a vehicle comprising a chassis and a system according to the invention, wherein at least one cross member at which preferably at least one maneuvering drive unit is supported is attached at the vehicle by means of at least one attachment device, preferably exactly two attachment devices. The attachment is preferably realized in such a manner that, as a result of a force introduced by the at least one clamping device, a component of a vehicle, in particular the chassis of a vehicle, is clamped in between that end area of the lever element that can be moved towards the basic element, or a pressure element arranged at this end area, and a section of a cross member that is received by the basic element and/or the basic element.

The system may comprise one, in particular two, maneuvering drive unit(s) that are in particular attached at respectively one axial end area of the cross member when mounted according to the intended use.

Finally, the subject matter of the invention is the use of an attachment device according to the invention for attaching a cross member at which preferably at least one maneuvering drive unit is supported at a component of a vehicle, in particular the chassis of a vehicle, preferably in such a manner that, as a result of a force that is applied by the at least one clamping device, a component of a vehicle, in particular the chassis of a vehicle, is clamped in between that end area of the lever element that can be moved towards the basic element, or a pressure element that is arranged at this end area, and a section of a cross member that is received by the basic element and/or the basic element.

The invention is illustrated more closely in the drawing based on an exemplary embodiments. Herein:
- Figure 1: shows an exemplary embodiment of an attachment device according to the invention in the mounted state according to the intended use in a perspective view obliquely from above;
- Figure 2: shows a side view of the attachment device of Figure 1;
- Figure 3: shows a back view of the attachment device of Figure 1;
- Figure 4: shows the lever element of the attachment device of Figure 1 from the side;
- Figure 5: shows the lever element of Figure 4 from above;
- Figure 6: shows the lever element of Figure 4 in a back view;
- Figure 7: shows the lever element of Figure 4 obliquely from above;
- Figure 8: shows an enlarged rendering of the front end area of the lever element of Figure 4 from the side;
- Figure 9: shows the basic element of the attachment device of Figure 1 from the side;
- Figure 10: shows the basic element of Figure 9 from above;
- Figure 11: shows the basic element of Figure 9 in a back view;
- Figure 12: shows the basic element of Figure 9 obliquely from above;
- Figure 13: shows the pressure element of the attachment device of Figure 1 from the side;
- Figure 14: shows the pressure element of Figure 13 from above;
- Figure 15: shows the pressure element of Figure 13 in a back view;
- Figure 16: shows the pressure element of Figure 13 obliquely from above;
- Figure 17: shows an enlarged sectional view of the pressure element of Figure 13;
- Figure 18: shows an enlarged perspective partial view of the lever element of the attachment device of Figure 1 with the pressure element affixed thereat;
- Figure 19: shows a top view onto a partially shown vehicle chassis at which a cross member supporting two maneuvering drive units is attached at the facing side members of the chassis in a clamped manner by means of two attachment devices according to Figure 1,
- Figure 20: shows an enlarged perspective view of one of the side members of the chassis of Figure 19 with a cross member being attached thereto, and
- Figure 21: shows the basic element of a second exemplary embodiment of an attachment device according to the invention obliquely from above.

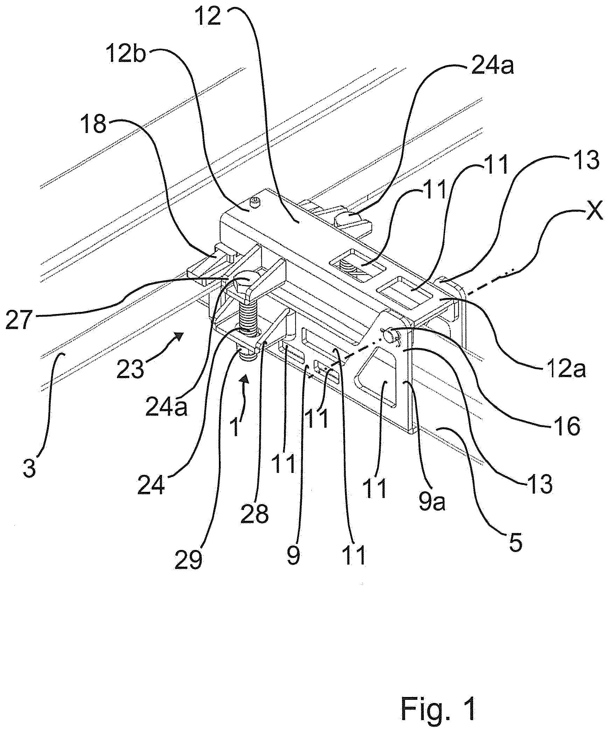

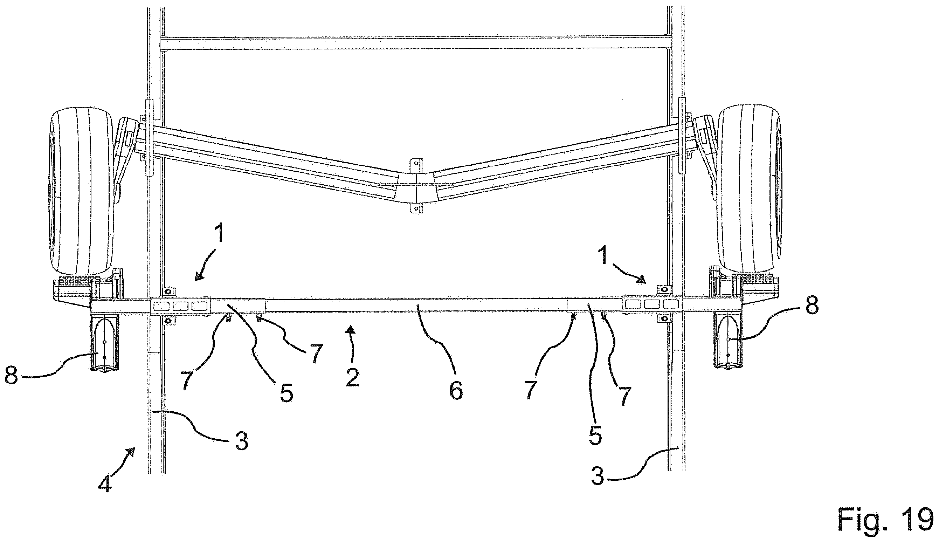

Figures 1 to 3 show an exemplary embodiment of an attachment device 1 according to the invention for attaching a cross member 2 at a vehicle, which is not shown in the Figures in any more detail, specifically at a side member 3 of the vehicle chassis 4, which can be clearly seen in Figure 19.

As can in particular be seen in Figure 19, the cross member 2 comprises two square tube sections 5 that are connected to each other by means of a bar 6 with a square profile. Specifically, respectively one square tube section is plugged on and affixed by means of screws 7 on the two axial ends of the bar 6. Each of the two square tube sections 5 supports a maneuvering drive unit 8 that serves for providing a comfortable maneuvering of the trailer equipped therewith, of which only the chassis 4 and two wheels are shown in Figure 19, even if the trailer is not connected to a towing vehicle.

For a particularly reliable attachment, the crossbar 2 that supports the two maneuvering drive units 8 is attached in a clamping manner at the two facing side members 3 of the chassis 4 (Figure 19) by means of two attachment devices 1 according to the exemplary embodiment described herein.

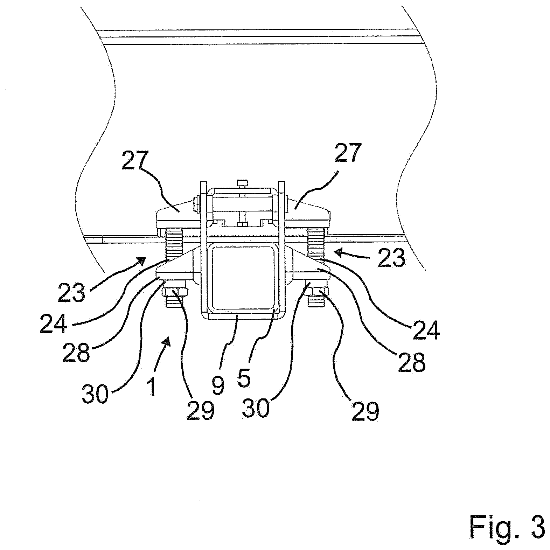

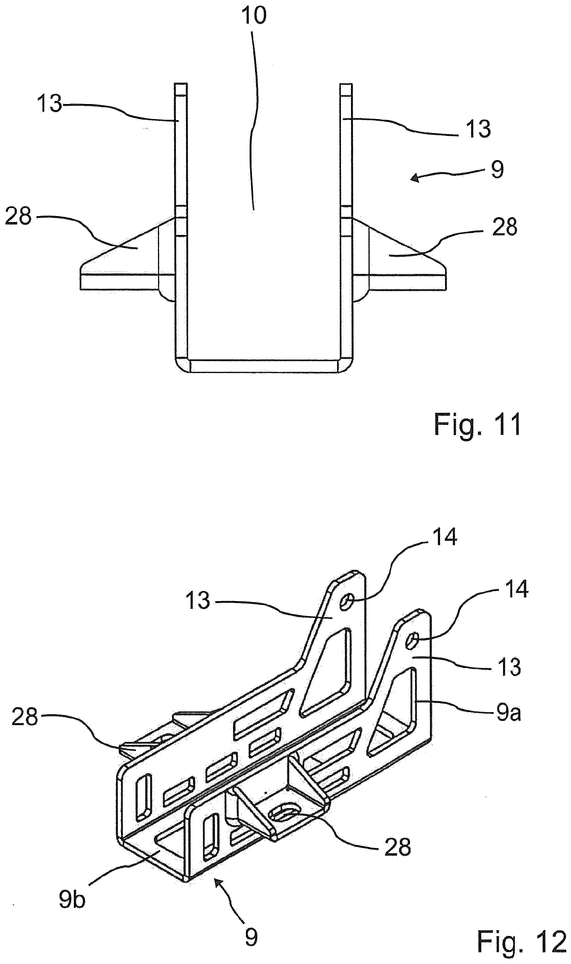

Each of the two attachment devices 1 comprises a basic element 9 that defines a reception space 10 (cf. in particular Figure 11) for a section of the crossbar 2. The basic element 9 is formed as a U-shaped profile part from punched sheet steel. Its dimensions are chosen in such a manner that it surrounds a square tube section 5 of the cross member 2 in a form-fitting manner and with play at three sides, as can in particular be seen in Figure 3. The basic element 9 has various perforations 11, so that it is characterized by a comparatively low weight while at the same time having a comparatively high stability.

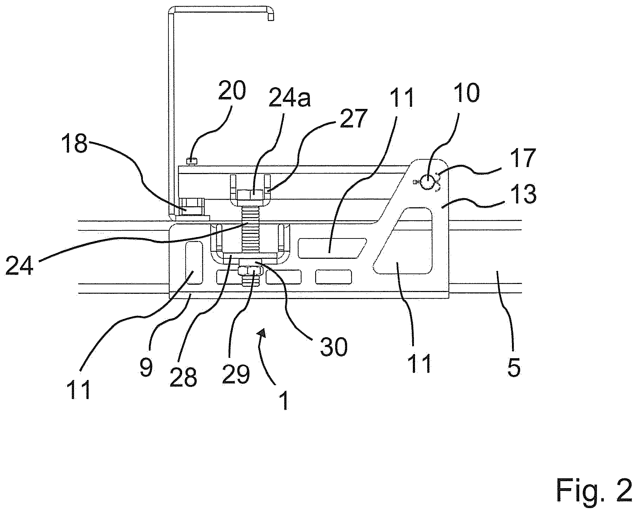

At the basic element 9, specifically at its open top side, a lever element 12 is supported so as to be pivotable about a pivot axis X, with the lever element 12 also being present in the form of a U-shaped profile part made of punched sheet steel and also having perforations 11 at least at its top side in the present case. Here, the pivotable mounting of the lever element 12 at the basic element 9 is constructionally realized by the basic element 9 having respectively one through bore 14 in the area of facing upwardly protruding sections 13, and the lever element 12 being provided with two corresponding through bores 15, as well as a bolt 16 extending through the through bores 14, 15, as can in particular be seen in Figures 1 and 2. The bolt 16 is secured against displacement along the pivot axis X by means of a safety splint 17 that can in particular be seen in Figure 2.

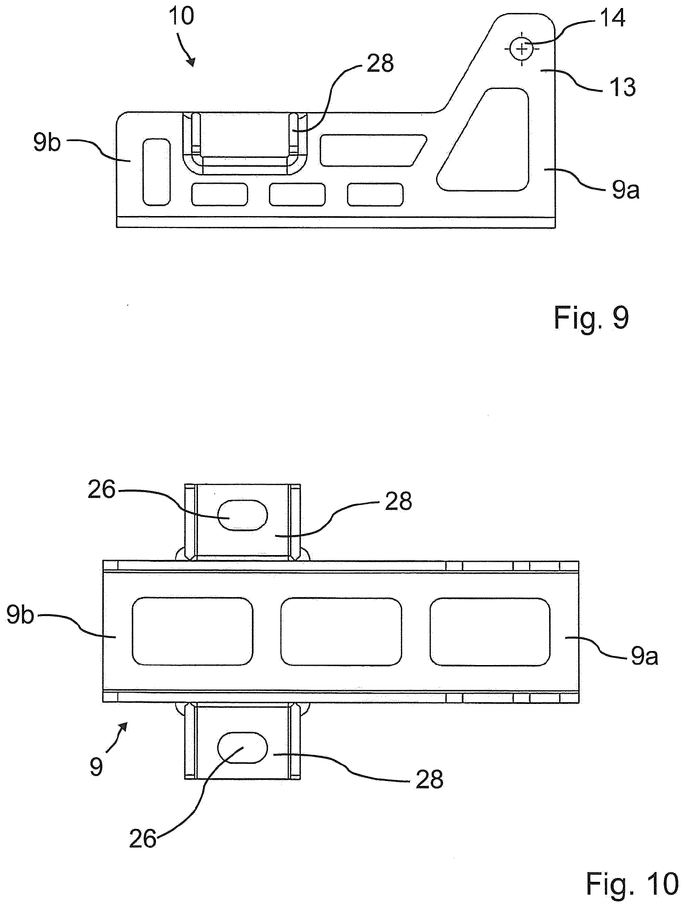

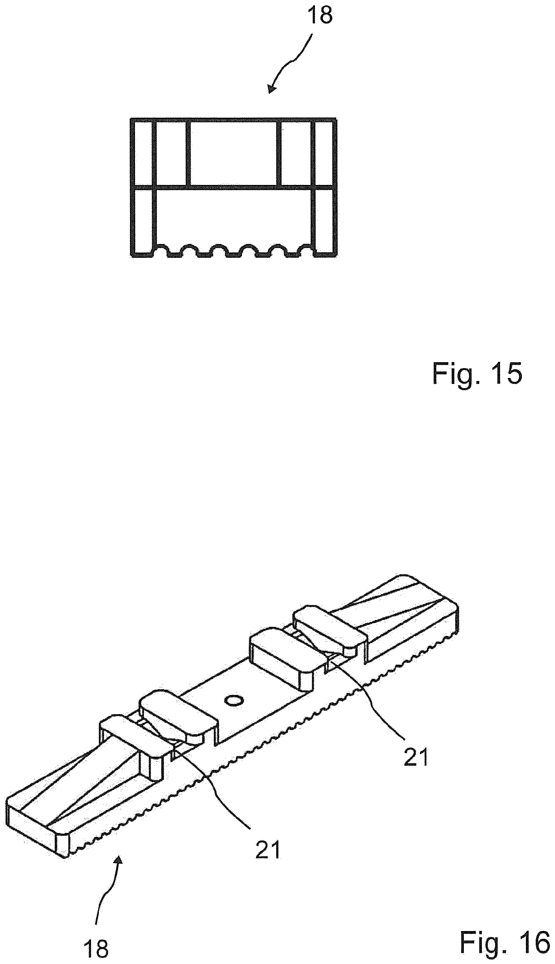

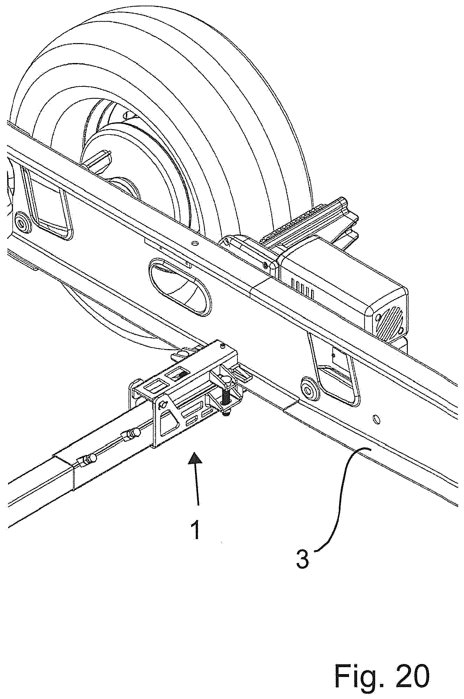

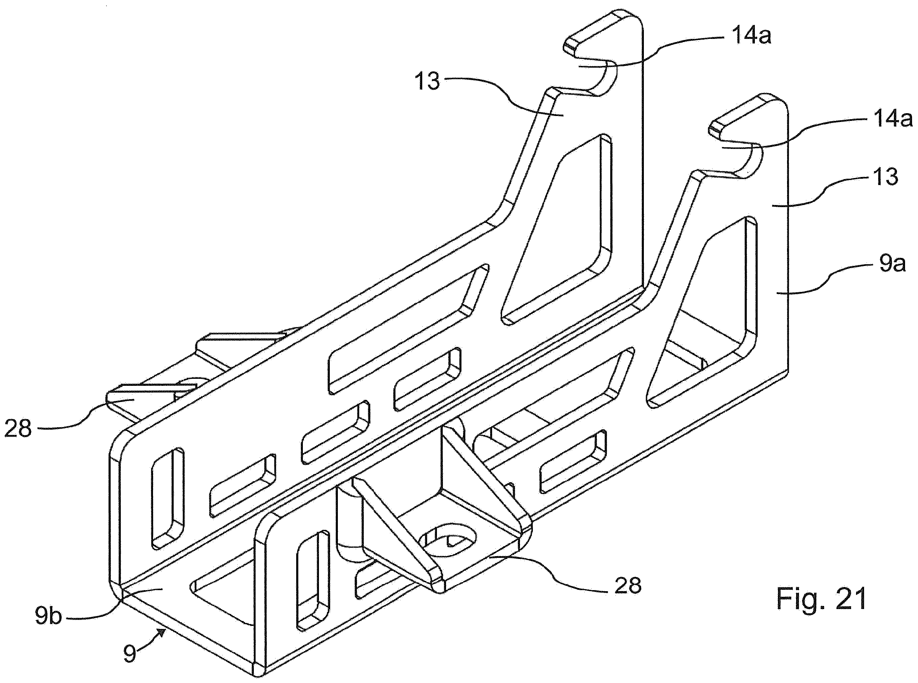

Alternatively to having through bores 14, the basic element 9 can also have recesses 14a in the area of the facing upwardly protruding sections 13 that are open on one side and into which the bolt 16 can be inserted form obliquely above. The recesses 14a can be seen in figure 21 which shows, in a perspective view from obliquely above, the basic element 9 of a second exemplary embodiment of an attachment device according to the present invention. All the remaining components of the device can be embodied identical to the first exemplary embodiment shown in figures 1 to 20 and are therefore not shown again. It should be noted that in the second embodiment with the recesses 14a in the basic element 9 there does not need to be a safety splint 17 but the bolt 16 can be rigidly connected to the lever element 12. For the second exemplary embodiment with the open recesses 14a it is especially easy to put together and separate the lever element 12 and the basic element 9, which gives even more flexibility.

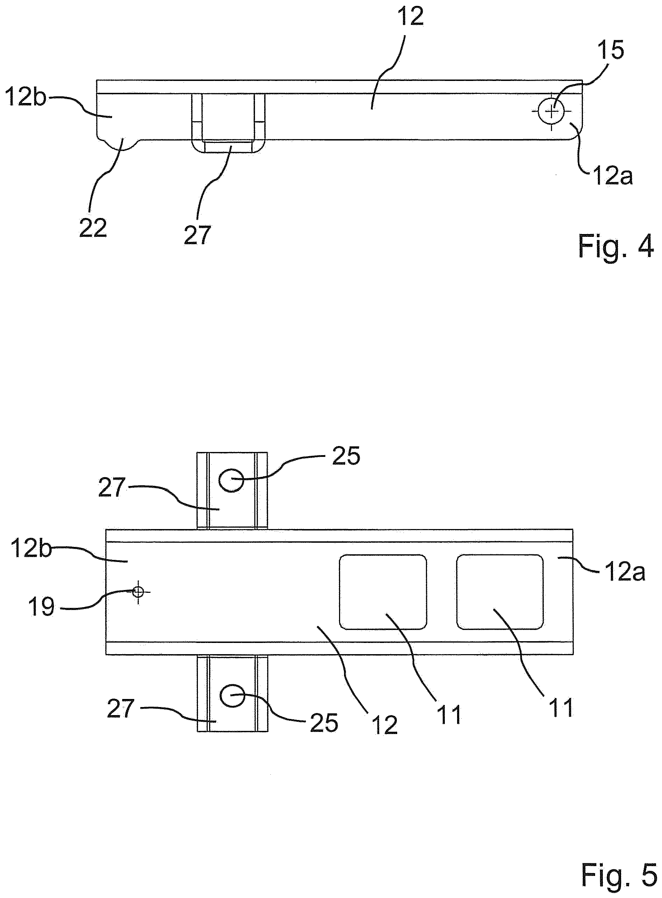

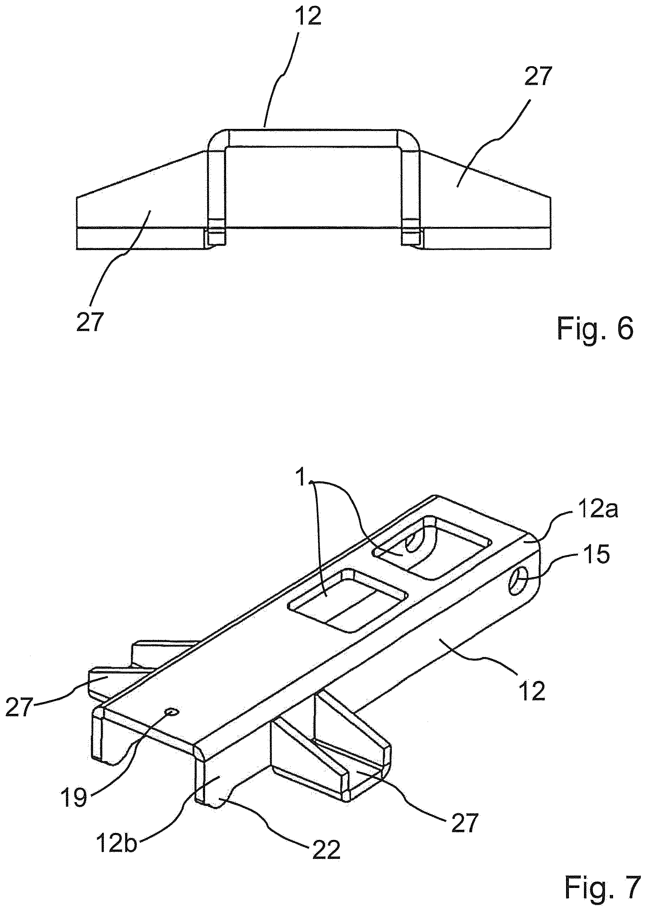

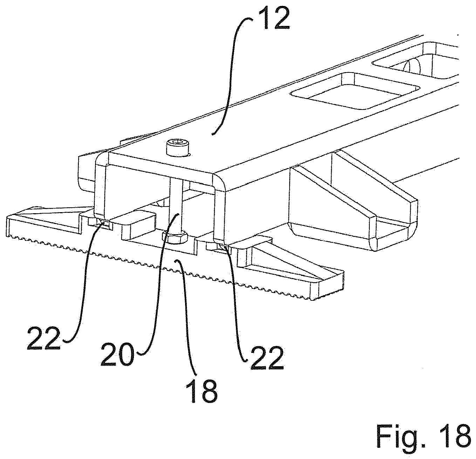

Via the bolt 16, the end area 12a of the lever element 12, which is oriented to the right in Figures 1 and 2, is mounted in a pivotable manner at the corresponding end area 9a of the basic element 9. At the facing end area 12b of the lever element 12, which is oriented to the left in Figures 1 and 2, an elongated pressure element 18 is affixed at the lever element 12 by means of a screw 20 (Figure 18) that extends through a through bore 19 (cf. Figures 5 and 7).

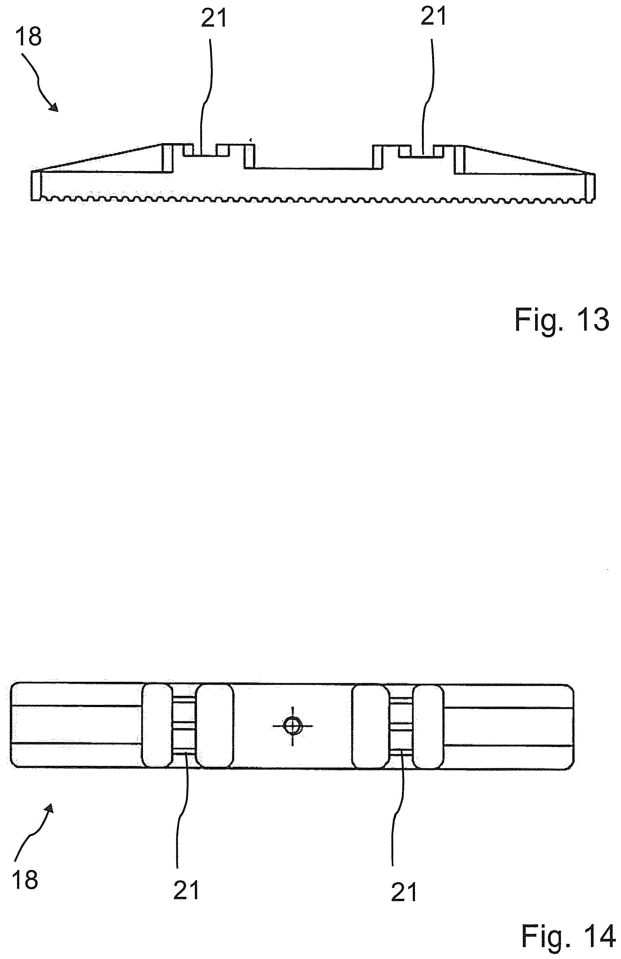

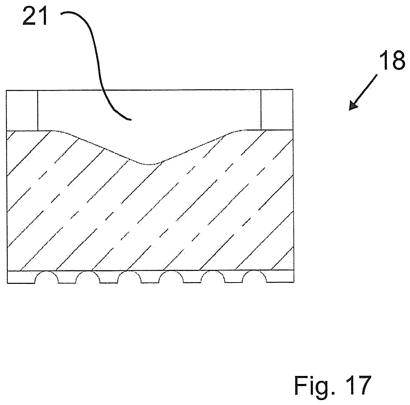

The pressure element 18, which is separately shown in Figures 13 to 17 in different enlarged views, is not made of sheet steel like the basic element 9 and the lever element 12, but rather consists of an aluminum alloy that is characterized by a hardness of less than 140 HB. This hardness is lower than that of the chassis 4, which is made of steel and has a hardness of 160 HB, so that the pressure element 18 protects the chassis 4 particularly effectively. At its bottom side, the pressure element 18 further has a coating of rubber, which again has a wave-shaped profile at the bottom side (cf. in particular Figure 17). In this manner, a particularly high friction and thus a particularly reliable affixing is obtained under pressure.

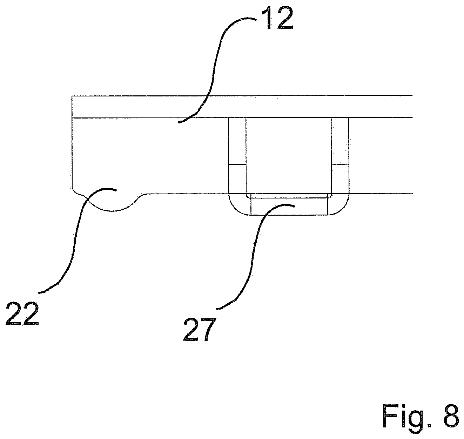

At its top side, the pressure element 18 further has two U-shaped indentations 21 (cf. Figure 17) that correspond to U-shaped projections 22 at the bottom side of the lever element 12 (cf. Figures 4 and 8). When the pressure element 18 is affixed at the lever element 12 with the screw 20, the two projections 22 mesh with the indentations 21, whereby a particularly secure positioning of the pressure element 18 is ensured, which also contributes to a particularly reliable affixing of the cross member 2 at the vehicle chassis 4. Thanks to the indentations 21 and corresponding projections 22, a firm pressing together can further be achieved even in the case that the chassis 4 has variations in thickness.

In order to be able to affix the two attachment devices 1 and the cross member 2 to the vehicle chassis 4 in a clamping manner, each of the two attachment devices 1 has two clamping devices 23 by means of which that end area 12b of the lever element 12 at which the pressure element 18 is attached can be moved in the direction of the basic element 9 so as to clamp in a section of the respective side member 3 of the chassis 4 between this end area 12b and the received cross member 2 (cf. in particular Figure 2). The clamping devices 23 are formed and arranged in such a manner that the force transmission is effected by means of them in that end area 12b of the lever element 12 that is also moved towards the basic element 9 as a result of the force transmission, whereby a particularly reliable affixing is achieved. Each of the two clamping devices 23, of which respectively one is arranged towards two facing sides of the basic element 9, comprise a screw 24 that respectively extends through a through bore 25 in the lever element 12 and a through bore 26 in the basic element 9 that is aligned with the same. Specifically, the through bores 25, 26 are provided in projections 27, 28 that are arranged in an aligned manner and respectively protrude towards both sides of the lever element 12 or the basic element 9. Here, the top projections 27 that protrude from the lever element 12 are dimensioned in such a manner that the head 24a of the screws 24 that is provided with an external hexagon is positioned inside the projection 27 in a torque-proof manner. A nut 29 serving as an actuating element of the respective clamping device 23 is screwed on from the bottom onto each of the two screws 24 extending in parallel to each other. The nuts 29 are located close to the bottom side of the basic element 9, and are thus particularly easy to access from the bottom. A washer 30 is provided between the respective nut 29 and the projection 28 in a per se known manner (cf. in particular Figures 2 and 3).

In order to fix a cross member 2 for mounting a maneuvering drive system with two maneuvering drive units 8 (cf. Figure 19) at the chassis 4 of a vehicle, respectively one attachment device 1 is slid onto an end of the cross member 2, and the attachment devices 1 are positioned with the received cross member 2 at respectively one side member 3 of the vehicle chassis 4, as can be seen in Figures 1 and 2. Then, a bottom area of the side member 3 is located between the bottom side of the pressure element 18 and the top side of the received cross member 2 or a square tube section 5. The basic element 9 and the cross member 2 are dimensioned in such a manner that the cross member 2 protrudes upwards and above the basic element 12 in the end area 12b that is oriented to the left in Figures 1 and 2, specifically by approximately 1 mm, so that the bottom side of the side member 3 is in contact with the top side of the crossbar 2 in this position (cf. Figure 2).

It has to be noted that in case of the second embodiment, where the basic element 9 has the recesses 14a (compare figure 21), the device does not have to be slid onto the cross member 2 in a completely pre-assembled state but the basic element 9 and the lever element 12 can be put together at the cross member 2 at the necessary position. The flexibility of putting together the two elements 9, 12 at the designated position might be advantageous if for example bolts are protruding from the cross member 2 which might inhibit or complicate the process of sliding the device onto a cross member 2.

In that case, the respective attachment device 1 is clamped in a very simple and quick and at the same time particularly reliable manner, with the user simply screwing in the two nuts 29 by means of a tool, such as an electrical cordless screwdriver, whereby the distance between the respective pair of projections 27, 28 is reduced, and the attachment device 1 is firmly clamped at the respective side member 3. There is enough space available for this purpose below the chassis 4.

It is to be understood that the two attachment devices 1 and the cross member 2, which is adjusted to the reception space 10 with respect to its dimensioning, or in reverse, form a system according to the invention or belong to such a system. In addition to the at least one, preferably exactly two, attachment device(s) 1 and a crossbar 2, a system according to the invention can further comprise at least one, in particular exactly two, maneuvering drive units 8.

## Claims

1. Attachment device (1) for attaching a cross member (2), which preferably supports at least one maneuvering drive (8), at a vehicle, comprising
- a basic element (9) that defines a preferably elongated reception space (10) for at least a section of a cross member (2) to be attached, extending in the longitudinal direction,
- a preferably elongated lever element (12) that is supported at the basic element (9), in particular at the preferably open top side of the basic element (9), so as to be pivotable about a pivot axis (X),
- at least one clamping device (23) by means of which an end area (12b) of the lever element (12) can be moved in the direction of the basic element (9) to clamp a component of a vehicle, in particular the chassis (4) of a vehicle, between this end area (12b) and a cross member (2) that is received by the basic element (9) and/or the basic element (9),
**characterized in that** the at least one clamping device (23) is embodied and arranged in such a manner that a force transmission occurs through the at least one clamping device (23) **in that** end area (12b) of the lever element (12) that is moved towards the basic element as a result of the force transmission.

2. Attachment device (1) according to claim 1, **characterized in that** that end area of the lever element (12) that faces that end area (12a) that is moved in the direction of the basic element (9) as a result of the force transmission through the at least one clamping device (23), is supported at the basic element (9) in a pivotable manner, and wherein the at least one clamping device (23) is in particular arranged at the side of the basic element (9) with respect to the longitudinal direction.

3. Attachment device (1) according to claim 1 or 2, **characterized in that** the at least one clamping device (23) comprises an actuating element, in particular in the form of a nut (29) or a screw head, and the actuating element (29) is arranged close to the bottom side of the basic element (9).

4. Attachment device (1) according to one of the forgoing claims, **characterized in that** the at least one clamping device (23) comprises at least one through bore (26) that is provided in the basic element (9), and at least one through bore (25) that is preferably aligned with the same and provided in the lever element (12), as well as a clamping element extending through the two through bores (25, 26) which may in particular be present in the form of a screw (24) or threaded rod and preferably extends at least substantially orthogonally with respect to the longitudinal direction.

5. Attachment device (1) according to claim 4, **characterized in that** the basic element (9) and the lever element (12) respectively have at least one projection (27, 28) arranged at the side, preferably being aligned with each other, and respectively one of the through bores (25, 26) is provided in each projection (27, 28).

6. Attachment device (1) according to one of the forgoing claims, **characterized in that** the at least one clamping device (23) is arranged at the side of the basic element (9) with respect to the longitudinal direction, and/or that the attachment device comprises at least two, in particular exactly two, clamping devices (23), and wherein preferably at least one, in particular exactly one, clamping device (23) is arranged towards two facing sides of the basic element respectively.

7. Attachment device (1) according to claim 4 or 5 and 6, **characterized in that** the clamping elements (24) of the at least two clamping devices (23) extent at least substantially in parallel to each other.

8. Attachment device (1) according to one of the forgoing claims, **characterized in that** the basic element (9) and/or the lever element (12) are embodied as U-shaped profile parts, and/or that the basic element (9) and/or the lever element (12) are made of punched sheet steel.

9. Attachment device (1) according to one of the forgoing claims, **characterized in that** a pressure element (18) is arranged at that end area (12b) of the lever element (12) that can be moved towards the basic element (9) by means of the at least one clamping device (23), wherein the pressure element (18) is preferably attached at the lever element (12) and/or is arranged in such a manner that it can be brought into contact with a component of a vehicle, in particular the chassis (4) of a vehicle, or is in contact with a component of a vehicle, in particular the chassis (4) of a vehicle, in the mounted state according to the intended use of the attachment device (1).

10. Attachment device (1) according to claim 9, **characterized in that** the pressure element (18) consist of a material or comprises such a material that is **characterized by** a hardness of less than 140 HB, in particular an aluminum alloy.

11. Attachment device (1) according to claim 9 or 10, **characterized in that** at its bottom side that is to be brought into contact with a component of a vehide, in particular the chassis (4) of a vehicle, the pressure element (18) has a wave-shaped profile and/or has a coating of rubber and/or plastic material.

12. Attachment device (1) according to one of claims 9 to 11, **characterized in that** the lever element (12) comprises at least one downwardly protruding, in particular U-shaped or V-shaped, projection (22), and the pressure element (18) has at least one correspondingly shaped and arranged indentation (21) into which in particular the U-shaped or V-shaped projection (22) of the lever element (12) meshes in the mounted state according to the intended use of the attachment device (1).

13. Attachment device (1) according to one of the forgoing claims, **characterized in that** the arrangement is realized in such a manner that, in the mounted state according to the intended use of the attachment device (1), a component of a vehicle, in particular the chassis (4) of a vehicle, is clamped in between that end area (12b) of the lever element (12) that can be moved towards the basic element (9), or a pressure element (18) arranged at this end area (12b), and a section of a cross member (2) that is received by the basic element (9) and/or the basic element (9) as a result of the force applied by the at least one clamping device (23).

14. System comprising at least one, preferably exactly two, attachment devices (1) according to one of the foregoing claims and at least one cross member (2) at which in particular at least one maneuvering drive unit (8) for a vehicle is supported, wherein the cross member (2) preferably has a rectangular, in particular at least substantially square, profile, wherein the basic element (9) and the cross member (2) are preferably dimensioned in such a manner that a section of a cross member (2) that is arranged in a reception space (10) defined by the basic element (9) protrudes at least in one end area (9b) of the basic element (9) upwards and above the basic element (9), preferably by at least 1 mm.

15. Vehicle comprising a chassis and a system according to claim 14, wherein at least one cross member (2) at which preferably at least one maneuvering drive unit (8) is supported is attached at the vehicle by means of at least one attachment device (1), preferably exactly two attachment devices (1), preferably in such a manner that as a result of a force introduced by the at least one clamping device (23), a component of a vehicle, in particular the chassis (4) of a vehicle, is clamped in between that end area (12b) of the lever element (12) that can be moved towards the basic element (9), or a pressure element (18) arranged at this end area, and a section of a cross member (2) that is received by the basic element (9) and/or the basic element (9).

16. Use of an attachment device (1) according to one of claims 1 to 13 for attaching a cross member (2) at which preferably at least one maneuvering drive unit (8) is supported at a component of a vehicle, in particular the chassis (4) of a vehicle, preferably in such a manner that, as a result of a force that is applied by the at least one clamping device (12), a component of a vehicle, in particular the chassis (4) of a vehicle, is clamped in between that end area (12b) of the lever element (12) that can be moved towards the basic element (9), or a pressure element (18) that is arranged at this end area (12b), and a section of a cross member (2) that is received by the basic element (9) and/or the basic element (9).

## Patentansprüche

1. Befestigungsvorrichtung (1) zur Befestigung eines Querträgers (2), der bevorzugt wenigstens eine Rangierantriebseinheit (8) trägt, an einem Fahrzeug, umfassend
- ein Basiselement (9), welches einen sich in Längsrichtung erstreckenden, bevorzugt länglichen Aufnahmeraum (10) für zumindest einen Abschnitt eines zu befestigenden Querträgers (2) definiert,
- ein an dem Basiselement (9), insbesondere an der bevorzugt offenen Oberseite des Basiselementes (9), um eine Schwenkachse (X) schwenkbar gehaltenes, bevorzugt längliches Hebelelement (12),
- wenigstens eine Spanneinrichtung (23), mit der ein Endbereich (12b) des Hebelelementes (12) in Richtung des Basiselementes (9) bewegbar ist, um eine Komponente eines Fahrzeuges, insbesondere das Fahrgestell (4) eines Fahrzeugs, zwischen diesem Endbereich (12b) und einem von dem Basiselement (9) aufgenommenen Querträger (2) und/oder dem Basiselement (9) einzuklemmen,
**dadurch gekennzeichnet, dass** die wenigstens eine Spanneinrichtung (23) derart ausgestaltet und angeordnet ist, dass eine Krafteinleitung durch die wenigstens eine Spanneinrichtung (23) in demjenigen Endbereich (12b) des Hebelelementes (12) erfolgt, der infolge der Krafteinleitung auf das Basiselement (9) zubewegt wird.

2. Befestigungsvorrichtung (1) nach Anspruch 1, **dadurch gekennzeichnet, dass** der Endbereich (12a) des Hebelelementes (12), der demjenigen Endbereich (12b), der infolge einer Krafteinleitung durch die wenigstens eine Spanneinrichtung (23) in Richtung des Basiselementes (9) bewegt wird, gegenüberliegt, schwenkbar an dem Basiselement (9) gehalten ist, und wobei insbesondere die wenigstens eine Spanneinrichtung (23) in Bezug auf die Längsachse seitlich des Basiselementes (9) angeordnet ist.

3. Befestigungsvorrichtung (1) nach Anspruch 1 oder 2, **dadurch gekennzeichnet, dass** die wenigstens eine Spanneinrichtung (23) ein Betätigungselement, insbesondere in Form einer Mutter (29) oder eines Schraubenkopfes umfasst, und das Betätigungselement (29) nahe der Unterseite des Basiselementes (9) angeordnet ist.

4. Befestigungsvorrichtung (1) nach einem der vorherigen Ansprüche, **dadurch gekennzeichnet, dass** die wenigstens eine Spanneinrichtung (23) wenigstens eine in dem Basiselement (9) vorgesehene Durchgangsbohrung (26) und wenigstens eine mit dieser bevorzugt fluchtende, in dem Hebelelement (12) vorgesehene Durchgangsbohrung (25) und ein sich durch die beiden Durchgangsbohrungen (25, 26) erstreckendes, insbesondere durch ein Schraube (24) oder Gewindestange gegebenes Spannelement, das sich bevorzugt zumindest im Wesentlichen orthogonal zur Längsrichtung erstreckt, umfasst.

5. Befestigungsvorrichtung (1) nach Anspruch 4, **dadurch gekennzeichnet, dass** das Basiselement (9) und das Hebelelement (12) jeweils wenigstens einen seitlich abragenden Vorsprung (28, 27) aufweist, die bevorzugt fluchten, und in jedem Vorsprung (28, 27) jeweils eine der Durchgangsbohrungen (25, 26) vorgesehen ist.

6. Befestigungsvorrichtung (1) nach einem der vorhergehenden Ansprüche, **dadurch gekennzeichnet, dass** die wenigstens eine Spanneinrichtung (23) in Bezug auf die Längsrichtung seitlich des Basiselementes (9) angeordnet ist, und/oder dass die Befestigungsvorrichtung wenigstens zwei, bevorzugt genau zwei Spanneinrichtungen (23) umfasst, und wobei insbesondere zu zwei gegenüberliegenden Seiten des Basiselementes (9) jeweils wenigstens eine, bevorzugt genau eine Spanneinrichtung (23) angeordnet ist.

7. Befestigungsvorrichtung (1) nach Anspruch 4 oder 5 und 6, **dadurch gekennzeichnet, dass** sich die Spannelemente (24) der wenigstens zwei Spanneinrichtungen (23) zumindest im Wesentlichen parallel zueinander erstrecken.

8. Befestigungsvorrichtung (1) nach einem der vorhergehenden Ansprüche, **dadurch gekennzeichnet, dass** das Basiselement (9) und/oder das Hebelelement (12) als U-förmiges Profilteil ausgebildet ist, und/oder das Basiselement (9) und/oder das Hebelelement (12) aus gestanztem Stahlblech gefertigt ist.

9. Befestigungsvorrichtung (1) nach einem der vorhergehenden Ansprüche, **dadurch gekennzeichnet, dass** an demjenigen Endbereich (12b) des Hebelelementes (12), welcher mittels der wenigsten einen Spanneinrichtung (23) auf das Basiselement (9) zu bewegbar ist, ein Druckelement (18) angeordnet ist, wobei das Druckelement (18) bevorzugt an dem Hebelelement (12) befestigt und/oder derart angeordnet ist, dass es mit einer Komponente eines Fahrzeugs, insbesondere dem Fahrgestell (4) eines Fahrzeugs in Kontakt bringbar ist oder im bestimmungsgemäß montierten Zustand der Befestigungsvorrichtung (1) mit einer Komponente eines Fahrzeugs, insbesondere dem Fahrgestell (4) eines Fahrzeugs in Kontakt steht.

10. Befestigungsvorrichtung (1) nach Anspruch 9, **dadurch gekennzeichnet, dass** das Druckelement (18) aus einem Material besteht oder ein solches Material umfasst, dass sich durch eine Härte von weniger als 140 HB auszeichnet, insbesondere eine Aluminiumlegierung.

11. Befestigungsvorrichtung (1) nach Anspruch 9 oder 10, **dadurch gekennzeichnet, dass** sich das Druckelement (18) an seiner mit einer Komponente eines Fahrzeugs, insbesondere dem Fahrgestell (4) eines Fahrzeugs in Kontakt zu bringenden Unterseite durch ein wellenförmiges Profil auszeichnet und/oder eine Beschichtung aus Gummi und/oder Kunststoff aufweist.

12. Befestigungsvorrichtung (1) nach einem der Ansprüche 9 bis 11, **dadurch gekennzeichnet, dass** das Hebelelement (12) wenigstens einen nach unten abragenden, insbesondere U- oder V-förmigen Vorsprung (22) und das Druckelement (18) wenigstens eine korrespondierend geformte und angeordnete Vertiefung (21) aufweist, in welche insbesondere der U- oder V-förmige Vorsprung (22) des Hebelelementes (12) im bestimmungsgemäß montierten Zustand der Befestigungsvorrichtung (1) eingreift.

13. Befestigungsvorrichtung (1) nach einem der vorhergehenden Ansprüche, **dadurch gekennzeichnet, dass** die Anordnung derart getroffen ist, dass im bestimmungsgemäß montierten Zustand der Befestigungsvorrichtung (1) infolge einer von der wenigstens einen Spanneinrichtung (23) eingebrachten Kraft eine Komponente eines Fahrzeugs, insbesondere das Fahrgestell (4) eines Fahrzeugs, zwischen demjenigen Endbereich (12b) des Hebelelementes (12), der auf das Basiselement (9) zubewegbar ist oder einem an diesem Endbereich (12b) angeordneten Druckelement (18) und einem von dem Basiselement (9) aufgenommenen Abschnitt eines Querträgers (2) und/oder dem Basiselement (9) eingeklemmt wird.

14. System umfassend wenigstens eine, bevorzugt genau zwei Befestigungsvorrichtungen (1) nach einem der vorhergehenden Ansprüche und wenigstens einen Querträger (2), an dem insbesondere wenigstens eine Rangierantriebseinheit (8) für ein Fahrzeug gehalten ist, und der Querträger (2) bevorzugt ein viereckiges, insbesondere zumindest im Wesentlichen quadratisches Profil aufweist, wobei das Basiselement (12) und der Querträger (2) bevorzugt derart dimensioniert sind, dass ein in dem von dem Basiselement (12) definierten Aufnahmeraum (10) angeordneter Abschnitt eines Querträgers (2) zumindest in einem Endbereich (9b) des Basiselementes (9) nach oben über das Basiselement (9) vorsteht, bevorzugt um wenigstens 1 mm.

15. Fahrzeug umfassend ein Fahrgestellt und ein System nach Anspruch 14, wobei wenigstens ein Querträger (2), an dem bevorzugt wenigstens eine Rangierantriebseinheit (8) gehalten ist, mittels wenigstens einer Befestigungsvorrichtung (1), bevorzugt genau zwei Befestigungsvorrichtungen (1) an dem Fahrzeug befestigt ist, insbesondere derart, dass infolge einer von der wenigstens einen Spanneinrichtung (23) eingebrachten Kraft eine Komponente eines Fahrzeugs, insbesondere das Fahrgestell (4) eines Fahrzeugs, zwischen demjenigen Endbereich (12b) des Hebelelementes (12), der auf das Basiselement (9) zubewegbar ist oder einem an diesem Endbereich angeordneten Druckelement (18) und einem von dem Basiselement (9) aufgenommenen Abschnitt eines Querträgers (2) und/oder dem Basiselement (9) eingeklemmt wird.

16. Verwendung einer Befestigungsvorrichtung (1) nach einem der Ansprüche 1 bis 13 zum Befestigen eines Querträgers (2), an dem bevorzugt wenigstens eine Rangierantriebseinheit (8) gehalten ist, an einer Komponente eines Fahrzeugs, insbesondere dem Fahrgestell (4) eines Fahrzeugs, bevorzugt derart, dass infolge einer von der wenigstens einen Spanneinrichtung (23) eingebrachten Kraft eine Komponente eines Fahrzeugs, insbesondere das Fahrgestell (4) eines Fahrzeugs, zwischen demjenigen Endbereich (12b) des Hebelelementes (12), der auf das Basiselement (9) zubewegbar ist oder einem an diesem Endbereich (12b) angeordneten Druckelement (18) und einem von dem Basiselement (1) aufgenommenen Abschnitt eines Querträgers (2) und/oder dem Basiselement (9) eingeklemmt wird.

## Revendications

1. Dispositif de fixation (1) pour la fixation d'une traverse (2), qui supporte de préférence au moins un entraînement de manœuvre (8), à un véhicule, comprenant
- un élément de base (9) qui défini un espace de réception (10) de préférence allongé, pour au moins une section d'une traverse (2) à fixer, s'étendant dans la direction longitudinale,
- un élément de levier (12) de préférence allongé, qui s'appuie sur l'élément de base (9), en particulier sur le côté supérieur, de préférence ouvert, de l'élément de base (9), de manière à pouvoir pivoter autour d'un axe de pivotement (X),
- au moins un dispositif de serrage (23) au moyen duquel une zone d'extrémité (12b) de l'élément de levier (12) peut être déplacée en direction de l'élément de base (9) pour serrer un composant d'un véhicule, en particulier le châssis (4) d'un véhicule, entre cette zone d'extrémité (12b) et une traverse (2) qui est reçue par l'élément de base (9) et/ou l'élément de base (9),
**caractérisé en ce que** le au moins un dispositif de serrage (23) est realisé et disposé de telle sorte qu'une transmission de force s'effectue par le au moins dispositif de serrage (23) dans la zone d'extrémité (12b) de l'élément de levier (12) qui est déplacée vers l'élément de base (9) en résultat de la transmission de force.

2. Dispositif de fixation (1) selon la revendication 1, **caractérisé en ce que** la zone d'extrémité de l'élément de levier (12), qui est tournée vers la zone d'extrémité (12a) qui est déplacée en direction de l'élément de base (9) par la transmission de force par le au moins un dispositif de serrage (23), est supportée de manière pivotante sur l'élément de base (9), et le au moins un dispositif de serrage (23) étant en particulier disposée sur le côté de l'élément de base (9) par rapport à la direction longitudinale.

3. Dispositif de fixation (1) selon la revendication 1 ou 2, **caractérisé en ce que** le au moins un dispositif de serrage (23) comprend un élément d'actionnement, en particulier sous la forme d'un écrou (29) ou d'une tête de vis, et l'élément d'actionnement (29) est disposé à proximité du côté inférieur de l'élément de base (9).

4. Dispositif de fixation (1) selon l'une des revendications précédentes, **caractérisé en ce que** le au moins un dispositif de serrage (23) comprend au moins un alésage traversant (26) prévu dans l'élément de base (9) et au moins un alésage traversant (25) de préférence aligné avec celui-ci et prévu dans l'élément de levier (12), ainsi qu'un élément de serrage s'étendant à travers les deux alésages trasversants (25, 26), qui peut notamment être présent sous la forme d'une vis (24) ou d'une tige filetée et qui s'étend de préférence au moins sensiblement orthogonalement à la direction longitudinale.

5. Dispositif de fixation (1) selon la revendication 4, **caractérisé en ce que** l'élément de base (9) et l'élément de levier (12) présentent respectivement au moins une saillie (27, 28) disposée latéralement, de préférence en alignement l'un avec l'autre et respectivement un des alésages traversants (25, 26) est prévu dans chaque saillie (27, 28).

6. Dispositif de fixation (1) selon l'une des revendications précédentes, **caractérisé en ce que** le au moins un dispositif de serrage (23) est disposé latéralement de l'élément de base (9) par rapport à la direction longitudinale et/ou **en ce que** le dispositif de fixation comprend au moins deux, en particulier exactement deux, dispositifs de serrage (23), au moins un, en particulier exactement un, dispositif de serrage (23) de préférence étant disposé respectivement vers deux côtes opposés de l'élément de base

7. Dispositif de fixation (1) selon la revendication 4 ou 5 et 6, **caractérisé en ce que** les éléments de serrage (24) des au moins deux dispositifs de serrage (23) s'étendent au moins sensiblement parallèlement l'un à l'autre.

8. Dispositif de fixation (1) selon l'une des revendications précédentes, **caractérisé en ce que** l'élément de base (9) et/ou l'élément de levier (12) sont réalisés sous forme de pièce profilée en forme de U, et/ou **en ce que** l'élément de base (9) et/ou l'élément de levier (12) sont réalisés en tôle d'acier estampé.

9. Dispositif de fixation (1) selon l'une des revendications précédentes, **caractérisé en ce qu'**un élément de pression (18) est disposé dans la zone d'extrémité (12b) de l'élément de levier (12) qui peut être déplacé vers l'élément de base (9) au moyen d'au moins un dispositif de serrage (23), l'élément de pression (18) étant de préférence fixé à l'élément de levier (12) et/ou étant disposé de préférence telle sorte qu'il peut être mis en contact avec un composant d'un véhicule, en particulier le châssis (4) d'un véhicule, ou étant de préférence en contact avec un composant d'un véhicule, en particulier le châssis (4) d'un véhicule, à l'état monté selon l'utilisation prévue de dispositif de fixation (1).

10. Dispositif de fixation (1) selon la revendication 9, **caractérisé en ce que** l'élément de pression (18) est constitué d'un matériau ou comprend un tel matériau qui est **caractérisé par** une dureté inférieure à 140 HB, en particulier un alliage d'aluminium.

11. Dispositif de fixation (1) selon la revendication 9 ou 10, **caractérisé en ce que** l'élément de pression (18) présente, sur sa face inférieure devant être mise en contact avec un composant d'un véhicule, en particulier le châssis (4) d'un véhicule, un profil ondulé et/ou un revêtement de caoutchouc et/ou en matière plastique.

12. Dispositif de fixation (1) selon l'une des revendications 9 à 11, **caractérisé en ce que** l'élément de levier (12) comprend au moins une saillie (22) faisant saillie vers le bas, en particulier en forme de U ou de V, et l'élément de pression (18) présente au moins un renforcement (21) de forme et de disposition correspondantes dans lequel, à l'état monté, s'engrène en fonction de l'utilisation prévue du dispositif de fixation (1), en particulier la saillie (22) en forme de U ou de V de l'élément de levier (12).

13. Dispositif de fixation (1) selon l'une des revendications précédentes, **caractérisé en ce que** l'arrangement est réalisé de telle manière que, à l'état monté selon l'utilisation prévue du dispositif de fixation (1), un composant d'un véhicule, en particulier le châssis (4) d'un véhicule, est serré entre la zone d'extrémité (12b) de l'élément de levier (12) pouvant être déplacé vers l'élément de base (9) ou un élément de pression (18) disposé sur cette zone d'extrémité (12b) et une section d'une traverse (2) qui est reçue par l'élément de base (9) et/ou l'élément de base (9) en résultat de la force appliquée par le au moins un dispositif de serrage (23).

14. Système comprenant au moins un, de préférence exactement deux, dispositifs de fixation (1) selon l'une des revendications précédentes et au moins une traverse (2) sur laquelle est supportée en particulier au moins une unité d'entraînement de manœuvre (8) pour un véhicule, la traverse (2) présentant de préférence un rectangle, en particulier au moins sensiblement carré, profilé, l'élément de base (9) et la traverse (2) étant de préférence dimensionnés de telle sorte qu'une section d'une traverse (2) qui est disposée dans un espace de réception (10) défini par l'élément de base (9) dépasse au moins dans une zone d'extrémité (9b) de l'élément de base (9) vers le haut et au-dessus de l'élément de base (9), de préférence d'au moins 1 mm.

15. Véhicule comprenant un châssis et un système selon la revendication 14, au moins une traverse (2), sur laquelle est supportée de préférence au moins une unité d'entraînement de manœuvre (8), étant fixée sur le véhicule au moyen d'au moins dispositif de fixation (1), de préférence exactement deux dispositifs de fixation (1), de préférence de telle manière que, en résultat d'une force introduite par le au moins un dispositif de serrage (23), un composant d'un véhicule, en particulier le châssis (4) d'un véhicule, est serré entre la zone d'extrémité (12b) de l'élément de levier (12) pouvant être déplacé vers l'élément de base (9) ou un élément de pression (18) disposé dans cette zone d'extrémité, et une section d'une traverse (2) qui est reçue par l'élément de base (9) et/ou l'élément de base (9).

16. Utilisation d'un dispositif de fixation (1) selon l'une des revendications 1 à 13 pour la fixation d'une traverse (2) sur laquelle de préférence au moins une unité d'entraînement de manœuvre (8) est supportée sur un composant d'un véhicule, en particulier le châssis (4) d'un véhicule, de préférence de telle manière que, en résultat d'une force qui est appliquée par le au moins un dispositif de serrage (12), un composant d'un véhicule, en particulier le châssis (4) d'un véhicule, est serré entre la zone d'extrémité (12b) de l'élément de levier (12) pouvant être déplacé vers l'élément de base (9) ou un élément de pression (18) disposé dans cette zone d'extrémité (12b) et une section d'une traverse (2) qui est reçue par l'élément de base (9) et/ou l'élément de base (9).
